# EUROPEAN PATENT APPLICATION

(11) **EP 3 090 847 A1**
(43) Date of publication of application: **09.11.2016**
(21) Application number: 16167618.4
(22) Date of filing: 29.04.2016
(51) Int. Cl.: B27B 33/08, B23D 59/00, B23D 61/02

(54) **CIRCULAR SAW BLADE AND WIPER ELEMENT**

(30) Priority: 08.05.2015 FI 20155334
(71) Applicant: TKM TTT Finland Oy, 37800 Akaa (FI)
(72) Inventor: Kanerva, Timo, 37800 Akaa (FI)
(74) Representative: Kolster Oy Ab

(57) **Abstract**

The invention relates to a circular saw blade for sawmill industry and, further, to a wiper element intended to be used in connection with circular saw blades. The circular saw blade (3) comprises at least one wiper element (16) on a side (20a) of a blade body (20). The wiper element is configured to remove sawdust (SD) from a saw-slit (SS) during the sawing. Orientation (WEO) of the wiper element is adjustable (A) according to circumstances and sawed material.

## Description

### Background of the invention

The disclosed solution relates to a circular saw blade to be used in a woodworking and forest industry. The blade comprises a blade body and a plural number of teeth on an outer circumference of the blade. The blade is also provided with one or more wiper elements comprising wiper blades for removing saw dust from a saw-slit during sawing. The wiper element is a separate piece arranged on at least one side of the blade body.

The disclosed solution also relates to a wiper element for a circular saw blade.

The field of the invention is described in more detail in the preambles of the independent claims.

At saw mills, logs are cut into timber of different lengths. In a first handling step the logs are fed through a canter-edger in which two sides of the log facing away from each other are machined to remove some of the surface layer. With the canter-edger, a log is shaped before the actual sawing to produce a rectangular saw blank, i.e. a cant. The canter-edger is provided with one or more circular saw blades and chippers. The saw mills may also comprise other sawing lines wherein the saw blanks are cut longitudinally by means of ripping saw blades into timber having desired dimensions. Thus, several type of circular saw blades are used in saw mills and forest industry. However, it has been noted that present circular saw blades have some disadvantages relating to sawdust removal.

### Brief description of the invention

It is an object of the invention to provide a novel and improved circular saw blade and a wiper element for removing sawdust from a saw-slit.

The circular saw blade of the invention is characterized in that the wiper means of the circular saw blade comprise at least one wiper element, which is a separate piece relative to the blade body and is fastened by means of fastening means to the blade body; and orientation of the at least one wiper element is adjustable.

The wiper element of the invention is characterized in that the wiper element comprises a cylindrical wiper body and a transversal elongated wiper blade attached at one end of the of the wiper body, whereby the wiper body is rotationally symmetrical and allows the wiper blade to be oriented by turning the wiper body relative to axis of the wiper body.

According to an idea, the circular saw blade intended to be used in sawmill and forest industry is provided with at least one adjustable wiper element, which is a separate piece mounted on a side surface of the saw blade. The wiper element may be set into at least two operational positions relative to direction of radius of the circular saw blade in order to influence to sawdust removal during the sawing process.

An advantage of the disclosed solution is that sawdust can be removed effectively from a saw-slit since orientation of the wiper blade may be set according to the sawing situation and the material being sawed. When the sawdust is removed effectively, heat production and wedging tendency may be decreased. As a result of appropriately removed sawdust, less stress is caused to the circular saw blade. Then, service life of the circular blade may be longer and breakage of the circular blade may be avoided. By means of using the disclosed circular saw blade, the production machinery of the saw mill may be used economically. Furthermore, the disclosed solution provides an opportunity to achieve high quality sawn goods having dimensional accuracy and smooth surfaces. High-quality timber naturally allows a better price to be obtained than timber in which sawdust penetrated between the saw blade and the saw blank has caused an uneven surface and dimensional variation to the blank.

Moreover, the very same circular saw blade and the wiper element may be used for different sawing situations, temperature conditions and wood species. Since one saw blade is suitable for two or more situations, the number of different type of saw blades may be decreased. The very same saw blade may be suitable for cutting anything from frozen wood to tropical hardwoods and dry or green softwoods. Also, downtimes of the sawing lines may be shorter since adjustment of the wiper element takes only a short time relative to changing procedure of the whole saw blade.

According to an embodiment, the wiper element has a predetermined adjusting range.

According to an embodiment, the adjusting range of the wiper element has a magnitude of at least 30°.

According to an embodiment, range of adjustment of the orientation of the wiper element is at maximum 90°. However, practical maximum range of orientation is about 70°.

According to an embodiment, the wiper element has an elongated wiper blade which has a longitudinal axis and the wiper blade is settable to direction wherein the longitudinal axis of the wiper blade is between 10 to 80° relative to a direction of the radius of the circular saw blade.

According to an embodiment, the wiper element has two or more pre-set or pre-determined orientation positions. In the orientation positions the wiper element has different orientations relative to the radius of the circular saw blade.

According to an embodiment, the wiper blade has two pre-set orientations, wherein a first orientation is intended for frozen wood and a second orientation is intended for normal sawing situations. Cutting and formation of saw dust are different for arctic winter sawing than sawing non-frozen timber and this can be now taken into consideration by adjusting the orientation of the wiper element.

According to an embodiment, the wiper blade has two pre-set orientations, wherein a first orientation is intended for hard wood and a second orientation is intended for conventional soft wood. Wood species have influence to cutting and formation of saw dust. According to the disclosed solution, orientation of the one or more wiper blades may be adjusted according to the wood material being sawed.

According to an embodiment, the wiper blade has two pre-set orientations, wherein a first orientation is intended for green wood and a second orientation is intended for dry wood. Cutting and formation of saw dust are different when dry or green timber is being sawn, and now this can be taken into consideration by adjusting the orientation of the wiper element.

According to an embodiment, the circular saw blade comprises two or more wiper elements. When the blade has two wiper elements, they are positioned opposite to each other relative to a rotation axis of the blade. Thereby, the wiper elements are in balance and do not cause vibrations during the sawing. When the blade is provided with three, four or even more wiper elements, they are positioned at equal circumferential distance from each other. Evenly positioned wiper elements ensure that the blade is well balanced.

According to an embodiment, the circular saw blade is provided with one or more wiper elements only on one side of the blade body.

According to an embodiment, the circular saw blade is provided with one or more wiper elements on both sides of the blade body.

According to an embodiment, the circular saw blade comprises two or more wiper elements, which are located at equal radial distance from a rotational axis of the saw blade.

According to an embodiment, the blade body is provided with at least two predetermined fixed orientation positions allowing the adjustable wiper element to be mounted alternatively to a first orientation position and to a second orientation position. The blade body may comprise at least one mounting recess provided with at least two predetermined fixed orientation positions allowing the adjustable wiper element to be mounted alternatively to a first orientation position and to a second orientation position. Then, the wiper element may be removed, set to an alternative position and refastened. Alternatively, the blade body may have several mounting points having different angular positions, whereby the orientation of the wiper element may be adjusted by selecting a mounting point having desired orientation position.

According to an embodiment, the orientation of the wiper element is adjustable steplessly. Thanks to this embodiment, direction of the wiper element may be adjusted in a versatile manner. The solution also allows fine adjustment of the orientation, whereby it is possible to optimise sawdust removal properties of the saw blade.

According to an embodiment, the blade body is provided with at least one mounting recess on at least one side of the blade body for receiving the wiper element. When the wiper element is mounted to the mounting recess, the wiper element is well supported against forces subjected during the sawing. Desired mounting recesses may be formed to a side surface of the saw blade by utilizing conventional machining techniques, for example.

According to an embodiment, the wiper element comprises a wiper body and an elongated wiper blade mounted to the wiper body, wherein orientation of the elongated wiper blade is adjustable. This embodiment allows the wiper element to be made of wear resisting material, whereas the wiper body may be of conventional tool material.

According to an embodiment, the wiper blade and the wiper body are made of different materials. The wiper blade may be made of hard metal material or may be hard-coated. The wiper body may be made of tool-making steel. By means of the hard-coating the wiper element may be given a far greater wear-resistance to mechanical and chemical wear.

According to an embodiment, the wiper blade of the wiper element is a wear part, which may be removed and changed when being worn out. Alternatively, the whole wiper element is a changeable wear part.

According to an embodiment, the wiper blade and the wiper body are formed to be one single integrated piece made of same material. Then, the wiper blade or wiper edge may be formed directly to the wiper body.

According to an embodiment, the wiper element has a wiper body, which is a cylindrical piece provided with a circular outer periphery and central axis. The blade body is provided with at least mounting recess configured to receive the cylindrical wiper body. Thus, the mounting recess has a circular inner periphery dimensioned in accordance with the circular outer periphery of the wiper body. Thereby, the circular peripheries form rotationally symmetrical mating surfaces allowing the wiper element to be turned relative to the mounting recess in order to adjust the orientation of the wiper element. The wiper element comprises a wiper blade, which is located at one end surface of the wiper body and is configured to protrude at least partly from the mounting recess when the wiper element is being mounted in the mounting recess. Thus, the wiper blade is visible when the wiper element is being mounted. The fastenings means are configured to lock the adjusted orientation of the wiper element and to prevent the wiper element from moving relative to the blade body during the operation of the circular saw blade. The disclosed structure allows stepless adjustment for the wiper element. Furthermore, the rotationally symmetrical shapes of the wiper body and the mounting recess are easy and fast to produce by chip removing cutting. The cylindrical wiper body may be made of a round bar or it may be machined by means of a lathe. The round mounting recess may be machined by drilling, for example.

According to an embodiment, the fastening means comprise at least one fastening screw. When the fastening is based on the use of mounting recess, then a bottom of the mounting recess may be provided with at least one through opening for the mentioned at least one fastening screw. The fastening screw is then mounted from a second side of the side of the blade body relative to the first side of the blade body provided with the mounting recess. By means of the one or more fastening screws the wiper element may be pulled tightly against the saw blade, whereby it stays immovable during the sawing.

According to an embodiment, the wiper element has a cylindrical wiper body and a turning axis or centre around which the adjustment movement is executable. The wiper element is mountable to a round mounting recess. A bottom of the mounting recess is provided with at least two curved slot-like openings, which are located at a distance from a turning centre of the wiper element. The adjusted wiper element is fastened immovably by means of at least two fastening screws, which are mountable from an opposite side of the blade body through the slot-like openings to threaded openings of the wiper body, which is located in the mounting recess. The fastening screws, which are mounted through the slot-like openings, are allowed to be moved together with the wiper element relative to the slot-like openings during adjustment of the orientation of the wiper blade. The slot-like openings allow the orientation of the wiper element to be stepless. Adjustment range of the orientation may be limited by means of lengths of the slot-like openings.

According to an embodiment, the wiper element has a cylindrical wiper body and a turning axis or centre around which the adjustment movement is executable. The wiper element is mountable to a round mounting recess. A bottom of the mounting recess is provided with at least four openings, which are located at a distance from a turning centre of the wiper element. The adjusted wiper element is fastened immovably by means of at least two fastening screws, which are mountable from an opposite side of the blade body through the openings to threaded openings of the wiper body, which is located in the mounting recess. The bottom of the mounting recess may be provided with two, three or even more sets of two openings arranged in predetermined angular arrangements so that the wiper element may be turned to angular positions determined by the opening settings. In each predetermined angular position threaded openings in a bottom of the wiper body match with the opening settings of the mounting recess, whereby the wiper element may be arranged in two or more different angular position. The fastening screws are mounted through the matching or aligned openings of the mounting recess and are tightened to threaded openings at the bottom of the wiper body. Thus, in this embodiment the wiper element is provided with alternative two, three or even more predetermined orientation positions.

According to an embodiment, the blade body may be provided with markings on the side of the blade body for indicating at least two predetermined orientations for the wiper blade. The wiper element may be steplessly adjustable, whereby the markings on the side of the blade body facilitate adjusting operation by showing to serviceman suitable orientations. The saw blade body may also be provided with symbols indicating sawing situations, circumstances or tree species in connection with the orientation markings. This way, the adjusting in easy and fast and does not require special means and skills.

According to an embodiment, the circular saw blade and the wiper element are intended for a canter-edger. The circular saw blade used in canter edger is also known as a frontal blade. The saw blade of the cater-edger is provided with one or more wiper elements which are located on a side facing a cutting blank. Thus, an opposite side of the saw blade facing a chipper part of the canter-edger is free of any wiper elements.

According to an embodiment, the circular saw blade and the wiper element are intended for ripping, in which the wood material is cut in longitudinal direction into smaller timber or pieces.

According to an embodiment, the circular saw blade and the wiper element are intended for cross cutting, wherein the logs or timber is cut into shorter pieces.

According to an embodiment, the saw blade comprises a blade body on whose outer circumference blade teeth are formed. Hence, the blade body is a single uniform circular plate.

According to an embodiment, the saw blade comprises a blade ring having the shape of a substantially circular ring. The blade teeth are on the outer circumference of the blade ring, their outermost tips forming one outer diameter. Thus, the saw blade has a blade element which has the shape of the circular ring. The blade ring may be provided with one or more wiper elements. The wiper element and its mounting may be according to the embodiments disclosed above.

According to an embodiment, the saw blade comprises two, three, four or more blade segments having the shape of a circular ring sector. The blade teeth are on the outer circumference of the blade segment and their outermost tips follow the same circular arc. Thus, the saw blade is formed of several blade elements which each have the shape of the segment of the circular ring. One or more of the blade segments may be provided with one or more wiper elements. The wiper element and its mounting may be according to the embodiments disclosed above.

The above disclosed embodiments and the disclosed features may be combined in order to generate desired combinations and solutions.

### Brief description of figures

Some embodiments and features are described in greater detail in the attached drawings, in which
Figure 1 is a schematic view of a principle of a canter-edger seen from a longitudinal direction of a saw log;
Figure 2 is a schematic side view of a detail of a circular saw blade or blade element provided with teeth on an outer circumference;
Figure 3 is a diagram showing some features of the disclosed circular saw blade;
Figure 4a is a schematic side view of a circular saw blade provided with adjustable wiper elements, and Figure 4b is an enlargement of an adjustable wiper arrangement;
Figure 5a is a schematic side view of a mounting recess of a saw blade body, Figure 5b is a schematic side view of a wiper element having a cylindrical wiper body and a transversal wiper blade, and Figure 5c is schematic cross-sectional view of a wiper arrangement seen in a direction of the saw blade;
Figure 6a is a schematic side view of a wiper arrangement wherein a wiper element is arranged to a first orientation position of a mounting recess, and in Figure 6b the wiper element is arranged to an alternative second orientation position of the same mounting recess;
Figures 7a and 7b are schematic side views of a wiper arrangement wherein a wiper element is in Figure 7a arranged to a first mounting recess provided with a first orientation position, and in Figure 7b is shown an alternative second mounting recess provided with a second orientation position;
Figures 8a to 8c are schematic side views of some embodiments of a circular saw blade; and
Figure 9 is a diagram showing reasons and motivation for executing adjustment of a wiper element of a circular saw blade.

In the figures, some embodiments are shown simplified for the sake of clarity. Like reference numerals refer to like parts in the figures.

### Detailed description of some embodiments

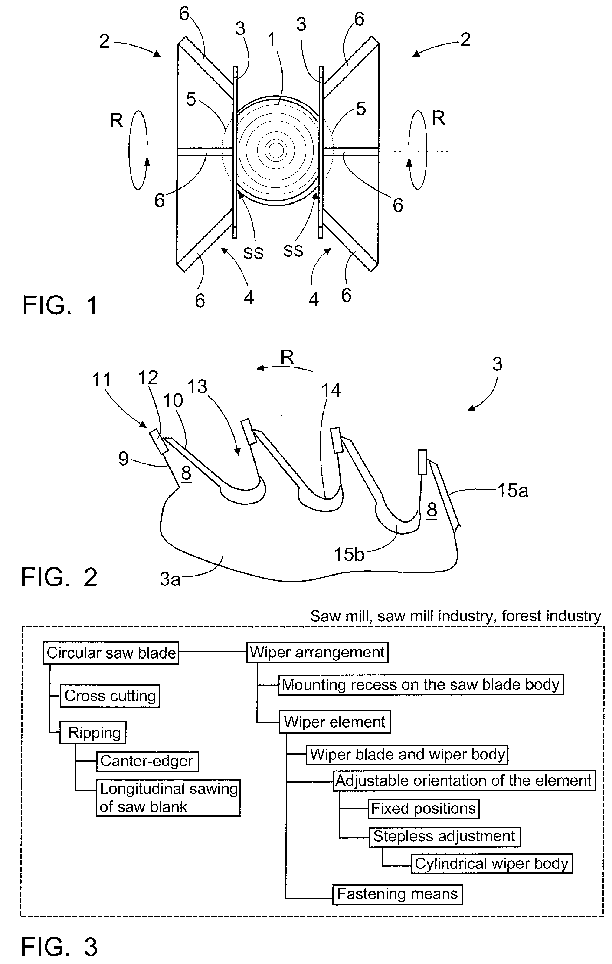

Figure 1 shows a structure of a canter-edger from a longitudinal direction of a log 1. The canter-edger comprises rotating blade units 2 that allow the log 1 to be shaped into a saw blank, i.e. a cant, having a substantially rectangular cross-section. Each blade unit 2 of the canter-edger comprises a sawing circular blade 3, known as a frontal blade, and a chipper part 4, which may be conical. The circular saw blade 3 first saws a surface piece 5 of a desired width from the surface of the log 1, chipper blades 6 arranged to a chipper part 4 then chopping the sawn surface piece 5 into chippings. The circular saw blade 3 and the chipper blades 6 are interconnected and rotate R simultaneously as the blade unit 2 is driven. Depending on the application, one or more chipper blades 6 may be provided.

The circular saw blade 3 or the frontal blade may be provided with one or more wiper elements arranged on the side surface facing towards the log 1 or saw blank. The wiper elements improve removal of sawdust from a saw-slit SS. When the sawdust flows fluently away from the cutting area, no extra loads are subjected to the saw blade 3 and the sawing is effective and the sawn products have good quality. Since the material being sawed varies as well as circumstances there is a need to direct the wiper element according to the current sawing situations without a need to change the whole circular saw blade 3.

Figure 2 shows a detail of an outer circumference of a circular saw blade 3 with a plural number of blade teeth 8 comprising a frontal surface 9 and a back surface 10. A blade tooth 8 may have a tip part 11 that has been sharpened to provide a chipping surface or, alternatively, the tip of the blade tooth may be provided with a replaceable blade bit 12. Between successive blade teeth 8 there is a sawdust space 13. Both the back surface 10 of a blade tooth and the bottom 14 of the sawdust space 13 may be provided with bevels 15a and 15b sloping from the outer edge of the blade to a side 3a. The purpose of these bevels 15a, 15b is to guide sawdust away from the bottom of the sawdust space. Despite of the disclosed bevels sawdust may penetrate into a saw-slit and cause problems, wherefore wiper elements may be arrange on the side of the saw blade.

Figure 3 shows that the circular saw blade disclosed in this patent application may be any kind of cross cutting blade intended for saw mill industry, or alternatively the circular saw blade may be a ripping saw blade intended for canter edger or any other industrial saw machine wherein a saw blank or timber is being sawed in a longitudinal direction. Thus, the disclosed circular saw blade is meant to be used at saw mills and sawing lines.

Figure 3 also discloses that the circular saw blade may be provided with one or more wiper arrangements comprising a mounting recess on at least one side of a blade body and a wiper element arranged to the recess. The wiper element may comprise a wiper blade, orientation of which is adjustable either to fixed positions or in a stepless way.

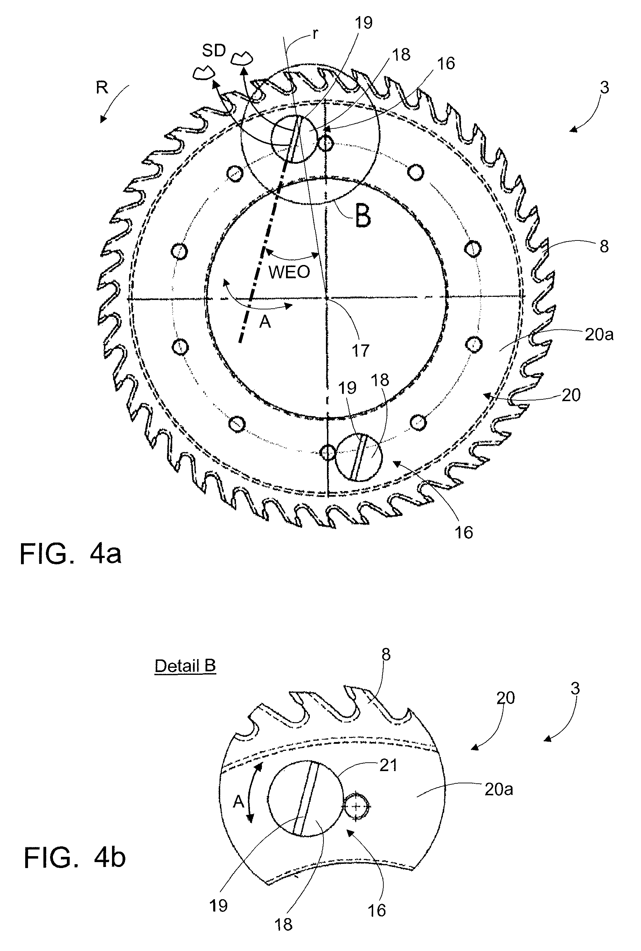

Figure 4a discloses of a circular saw blade 3 provided with two adjustable wiper elements 16, which are located opposite to each other relative to a rotating centre 17 of the saw blade 3. The wiper element 16 comprises a wiper body 18 and wiper blade 19 arranged to the wiper body 18. The wiper blade 19 is configured to remove sawdust SD, which is penetrated between a side of the blade body 20 and a sawed object. The wiper element 16 is oriented WEO so that the wiper blade 19 has a desired angular direction relative to a radius r of the blade body 20. The wiper blade 19 needs to be oriented so that it pushes the sawdust SD towards an outer circumference when the saw blade 3 is rotating R. The orientation of the wiper element 16 may be adjusted A in order to find out an angle fitting best for each sawing situation. The wiper element orientation WEO may be 10 to 60°, for example.

Figure 4b shows an enlargement of detail B of Figure 4a. The wiper element 16 may be arranged to a mounting recess 21 on a side surface 20a of the blade body 20. The wiper blade 19 protrudes from the recess 21 and serves as an element for pushing the sawdust away from a saw-slit. The wiper element 16 may be provided with rotationally symmetrical wiper body so that it can be adjusted A by turning it in the recess 21 into a suitable orientation position and locked in place.

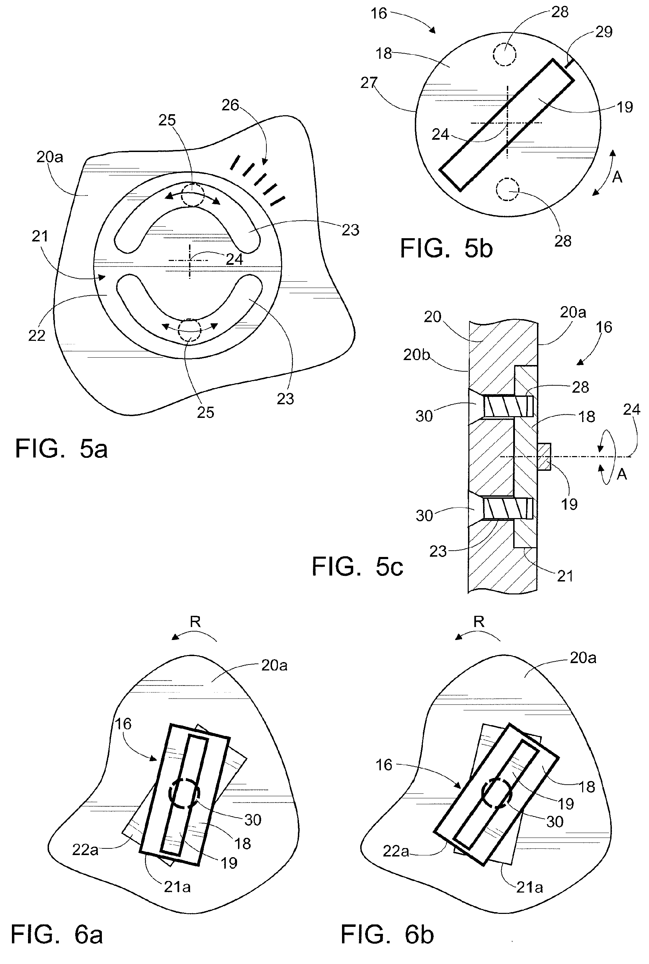

Figure 5a discloses a mounting recess 21, which is located on a surface side 20a of a blade body 20. Form of the recess 21 is round and it has a bottom 22 provided with curved slot-like openings 23, which are arranged symmetrically at a distance from a central axis 24 of the recess 21. Fastening screws 25 are arranged through the slot-like openings 23 and when the fastening screws are loosened then a wiper element and fastening screws mounted to it can be turned relative to the mounting recess 21. Adjusting movement is illustrated by means of arrows in Figure 5a.

Figure 5a further discloses markings 26, which may be made to the side 20a of the blade body 20 for assisting execution of the adjustment. In a simple embodiment the markings may comprise lines showing some predesigned orientation directions or angular values. However, it is possible to provide some other information also by means of the markings.

Figure 5b discloses a wiper element 16 having a cylindrical wiper body 18 and a transversal elongated wiper blade 19 arranged or formed on a visible end of the wiper body 18. The cylindrical wiper body 18 has a circular outer periphery 27 matching with a shape of the mounting recess 21. Since the wiper element 16 is rotationally symmetrical, it can be turned relative to the turning axis 24 when adjusting A the orientation. A bottom of the wiper body 18 comprises threaded openings 28 for receiving the fastening screws. Further, the wiper body 18 may comprise one or more markings 29 for assisting adjustment A.

Figure 5c shows the wiper arrangement and mutual relationship between the features disclosed in connection with Figures 5a and 5b. Figure 5c illustrates also that the fastening screws 30 are mounted from an opposite second side surface 20b of the blade body 20 relative to the mounting recess 21.

In an alternative solution, the slot-like openings 23 disclosed in Figure 5a may be substituted by a plural number of separate openings arranged on a same radial distance, whereby the wiper element 16 may be mounted to two or more fixed orientation positions instead of stepless orientation.

Figure 6a discloses a wiper arrangement wherein a wiper element 16 is arranged to a first orientation position of a first mounting recess 21 a. As can be noted, there is also a second recess 21 b on the side 20a of the blade body allowing the wiper element 16 to be placed to a second orientation position, which situation is disclosed in Figure 6b. The wiper element 16 and the recesses 21 a, 21 b may have rotationally non-symmetrical shapes whereby the structures are form-locked and one single fastening screw may be sufficient to fasten the arrangement in place.

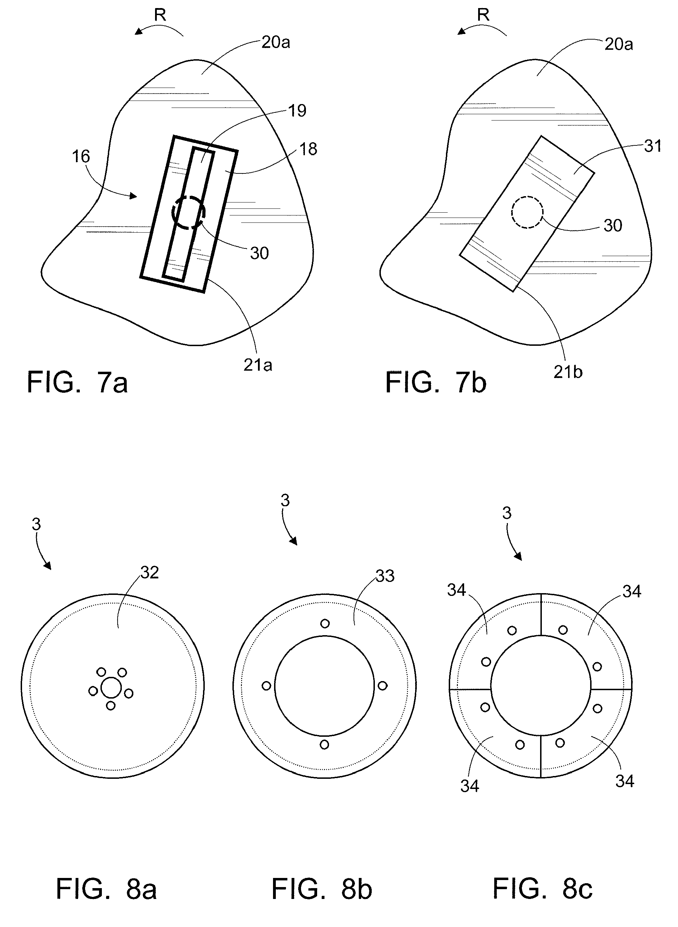

Figures 7a and 7b disclose an alternative solution to the one disclosed in Figures 6a and 6b. In Figures 7a and 7b the side 20a of the blade body is provided with two or more separate mounting recesses 21 a and 21 b having different fixed orientations. Those mounting recess which are not in use may be provided with a dummy element 31 for filling the unused mounting recess 21 b. The dummy element 31 or piece may comprise a wiper body 18 without a protruding wiper blade. Thanks to the dummy element 31, the surface 20a of the blade body may be even and accumulation of sawdust may be prevented.

Figures 8a to 8c show several alternative constructions of circular saw blades 3. Figure 8a shows a blade having the shape of a circular plate 32 with blade teeth formed directly thereto. Figure 8b shows a blade element having the shape of a circular ring 33 that may be directly attached to a canter-edger or other sawing machine, or it may be first attached to a disc-like blade body and then to a sawing line machine. Further, the disclosed solution may be applied to circular saw blades of Figure 8c comprising two or more blade elements having the shape of a circular ring sector 34. For the sake of clarity, Figures 8a to 8c do not show the blade teeth and wiper elements.

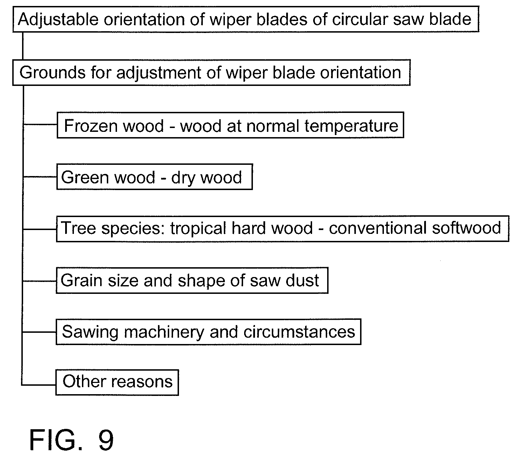

Figure 9 is a diagram showing reasons and motivation for executing adjustment of a wiper element of a circular saw blade.

It should be mentioned that one application of a canter-edger in connection with sawing machines is what is known as a profiling machine, which also comprises a circular saw blade and a chipper blade. Consequently, the subject matter disclosed in this application also applies to a profiling device.

In some cases, features disclosed in this application may be used as such, irrespective of other features. On the other hand, when necessary, the features disclosed in this application may be combined to provide various combinations.

The drawings and the related description are only intended to illustrate the idea of the invention. The details of the invention may vary within the scope of the claims.

## Claims

1. A circular saw blade, comprising:
a blade body (20) having a first side and a second side;
a plural number of blade teeth (8) on an outer circumference of the circular saw blade (3); and
wiper means on the side of the blade body for removing saw dust from a saw-slit (SS) generated by the circular saw blade (3);
**characterized in that**,
the wiper means of the circular saw blade (3) comprise at least one wiper element (16), which is a separate piece relative to the blade body (20) and is fastened by means of fastening means to the blade body (20); and
orientation (WEO) of the at least one wiper element (16) is adjustable (A).

2. The circular saw blade as claimed in claim 1, **characterized in that**,
the blade body (20) is provided with at least two predetermined fixed orientation positions allowing the adjustable wiper element (16) to be mounted alternatively to a first orientation position and to a second orientation position.

3. The circular saw blade as claimed in claim 1, **characterized in that**,
the orientation (WEO) of the wiper element (16) is adjustable steplessly.

4. The circular saw blade as claimed in any one of the preceding claims 1-3, **characterized in that**,
the blade body (20) is provided with at least one mounting recess (21) on at least one side (20a) of the blade body for receiving the wiper element (16).

5. The circular saw blade as claimed in any one of the preceding claims 1-4, **characterized in that**,
the wiper element (16) comprises a wiper body (18) and an elongated wiper blade (19) mounted to the wiper body (18), wherein orientation (WEO) of the elongated wiper blade (19) is adjustable (A).

6. The circular saw blade as claimed in any one of the claims 1-5, **characterized in that**,
the at least one wiper element (16) has a wiper body (18), which is a cylindrical piece provided with a circular outer periphery (27);
the blade body (20) is provided with at least mounting recess (21) configured to receive the wiper body (18) and has a circular inner periphery dimensioned in accordance with the circular outer periphery (27) of the wiper body (18), whereby the circular peripheries form rotationally symmetrical mating surfaces allowing the wiper element (16) to be turned relative to the mounting recess (21) in order to adjust (A) the orientation (WEO) of the wiper element (16);
the at least one wiper element (16) comprises a wiper blade (19) which is located at one end of the wiper body (18) and is configured to protrude at least partly from the mounting recess (21) when the wiper element (16) is being mounted in the mounting recess (21); and
the fastenings means are configured to lock the adjusted (A) orientation (WEO) of the wiper element (16) and to prevent the wiper element (16) from moving relative to the blade body (20) during the operation of the circular saw blade (3).

7. The circular saw blade as claimed in claim 6, **characterized in that**,
the mounting recess (21) comprises a bottom (22) provided with at least two curved slot-like openings (23), which are located at a distance from a turning centre (24) of the wiper element (16);
the fastening means comprise at least two fastening screws (30), which are mountable from a second side (20b) of the blade body (20) relative to the first side (20a) of the blade body (20) provided with the mounting recess (21); and
the fastening screws (30) are mounted through the slot-like openings (23) to the wiper body (18) and are allowed to be moved together with the wiper element (16) relative to the slot-like openings (23) during adjustment (A) of the orientation (WEO) of the wiper element (16).

8. The circular saw blade as claimed in any one of the preceding claims 1-7, **characterized in that**,
the blade body (20) is be provided with markings (26) on the side (20a) of the blade body (20) for indicating at least two predetermined orientations (WEO) for the wiper element (16).

9. The circular saw blade as claimed in any one of the preceding claims 1-8, **characterized in that**,
the circular saw blade (3) is for a canter-edger; and
the at least one wiper element (16) is located on a side facing a cutting blank and a side facing a chipper part of the canter-edger is free of any wiper elements.

10. A wiper element for a circular saw blade;
**characterized in that**,
the wiper element (16) comprises a cylindrical wiper body (18) and a transversal elongated wiper blade (19) attached at one end of the of the wiper body (18), whereby the wiper body (18) is rotationally symmetrical and allows the wiper blade (19) to be oriented by turning the wiper body (18) relative to axis (24) of the wiper body (18).
